# FASCICULE DE BREVET EUROPEEN

(11) **EP 1 088 172 B1**
(45) Date de publication et mention de la délivrance du brevet: **14.01.2004**
(21) Numéro de dépôt: 99957085.6
(22) Date de dépôt: 18.06.1999
(51) Int. Cl.: F16B 21/20, F16B 9/02

(54) **DISPOSITIF DE MAINTIEN D'UN ORGANE ENGAGE DANS UN ORIFICE D'UN SUPPORT**
HALTEVORRICHTUNG FÜR EIN IN EINE TRÄGERÖFFNUNG EINGEBRACHTES ELEMENT
DEVICE FOR MAINTAINING A MEMBER ENGAGED IN A SUPPORT ORIFICE

(30) Priorité: 19.06.1998 FR 9807789
(43) Date de publication de la demande: 04.04.2001
(73) Titulaire: Renault s.a.s., 92100 Boulogne Billancourt (FR)
(72) Inventeur: AUBERT, Jean-Marie, F-78380 Bougival (FR); MARCEL, Eric, F-91300 Massy (FR)
(86) Numéro de dépôt international: PCT/FR1999/001474
(87) Numéro de publication internationale: WO 1999/066217

(56) Documents cités:
- GB-A- 861 050

## Description

La présente invention concerne un dispositif de maintien d'un organe engagé dans un orifice d'un support, en particulier d'un capteur sur le carter d'un moteur de véhicule automobile selon le préambule de la revendication 1.

Les dispositifs utilisés classiquement pour ce genre de maintien sont du type à vis radiales ou à pièces d'arrêt telles que clavettes, circlips ou joncs. Ces dispositions nécessitent d'effectuer des usinages adaptés sur le support et engendrent des difficultés de positionnement et de réglage de l'organe par rapport au support.

Le document GB861050 enseigne un dispositif de maintien une patte en forme de U. Les montants de la patte présentent un perçage par lequel peut être introduit l'élément à maintenir sur un support comprenant également un orifice. Ce dispositif bien qu'assurant la solidarisation de l'élément sur le support ne permet pas une maintien efficace.

Le but de la présente invention est de proposer un dispositif qui permette à la fois un montage et un réglage aisés ainsi qu'un maintien efficace d'un organe dans un passage ou orifice d'un support.

Ce dispositif de maintien selon la revendication 1 est formé à partir d'une plaque en un matériau déformable élastiquement et comprend une première partie susceptible de venir en appui contre la paroi périphérique dudit organe, en dehors dudit orifice, une seconde partie susceptible de venir en appui contre au moins une zone dudit support, ces parties étant disposées l'une par rapport à l'autre de façon à, après montage, appliquer ledit organe contre la paroi dudit passage ou orifice dudit support.

Selon l'invention, ladite première partie est de préférence en appui contre la face latérale ou flanc dudit support adjacente audit orifice.

Selon une variante d'exécution de l'invention, le dispositif de maintien comprend deux bagues opposées, constituant ladite première partie, susceptibles d'être disposées de part et d'autre d'une partie en saillie dudit support présentant ledit orifice et au travers desquelles est susceptible de s'étendre ledit organe, ainsi qu'une traverse reliant lesdites bagues.

Selon l'invention, ladite traverse comprend de préférence deux branches opposées, constituant ladite seconde partie, dont les extrémités sont susceptibles de venir en appui contre deux zones dudit support.

Selon l'invention, ladite traverse peut avantageusement présenter au moins une partie déformée susceptible de venir en appui contre une zone d'extrémité de ladite partie en saillie dudit support.

Selon l'invention, ladite traverse peut avantageusement porter des pattes susceptibles de venir en appui contre la paroi périphérique dudit organe de façon à appliquer ce dernier dans les passages desdites bagues, à l'opposé de la zone d'appui dudit organe dans l'orifice dudit support.

Selon l'invention, ladite traverse peut avantageusement porter une vis susceptible de venir en appui contre une zone d'extrémité de ladite partie en saillie dudit support.

Selon une variante de l'invention, le dispositif de maintien peut avantageusement comprendre deux bagues reliées en un endroit de leurs périphéries et susceptibles d'être traversées par ledit organe à maintenir, de façon à coincer cet organe lors de leur écartement, ainsi qu'une traverse présentant un crochet entrant en prise avec ledit support.

La présente invention sera mieux comprise à l'étude de dispositifs de maintien d'organes engagés axialement dans des orifices de support décrits à titre d'exemples non limitatifs et illustrés par le dessin sur lequel :
- la figure 1 représente une vue de côté d'un dispositif de maintien selon la présente invention d'un organe monté sur un support ;
- la figure 2 représente une coupe axiale selon II-II du montage de la figure 1 ;
- la figure 3 représente une vue de dessus du montage de la figure 1 ;
- la figure 4 représente une vue en perspective du dispositif de maintien de la figure 1 ;
- la figure 5 représente une vue de côté d'un autre dispositif de maintien selon la présente invention, dans une position intermédiaire de montage ;
- la figure 6 représente le montage de la figure 5 en position finale de montage ;
- la figure 7 représente une vue en perspective du dispositif de maintien de la figure 5 ;
- la figure 8 représente une coupe axiale d'un autre dispositif de maintien selon la présente invention d'un organe sur un support ;
- la figure 9 représente une vue en perspective du dispositif de maintien de la figure 8 ;
- la figure 10 représente une coupe axiale d'un autre dispositif de maintien selon la présente invention d'un organe sur un support ;
- la figure 11 représente une vue en perspective du dispositif de maintien de la figure 10 ;
- la figure 12 représente une coupe axiale d'un autre dispositif de maintien selon la présente invention d'un organe sur un support ;
- et la figure 13 représente une vue en perspective du dispositif de maintien de la figure 12.

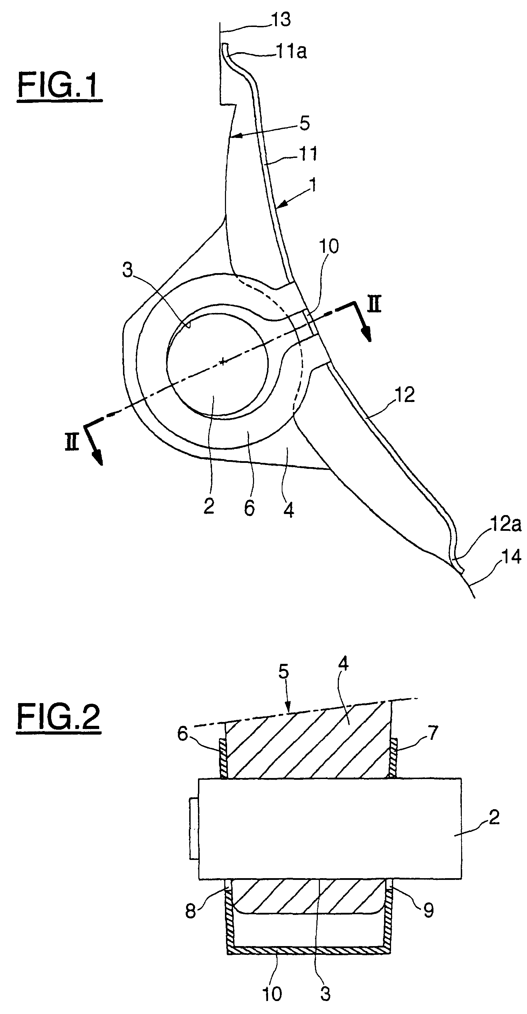

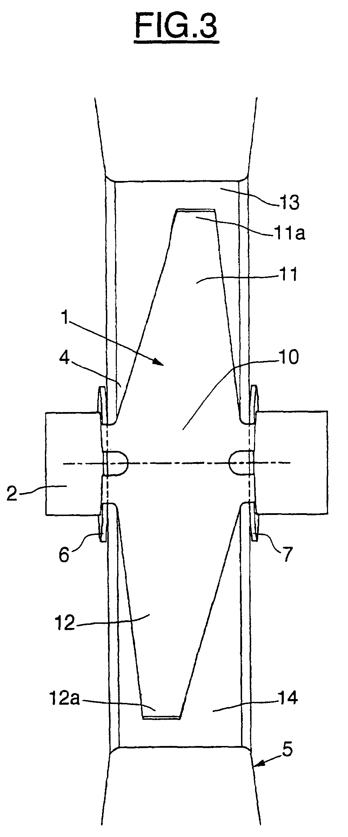

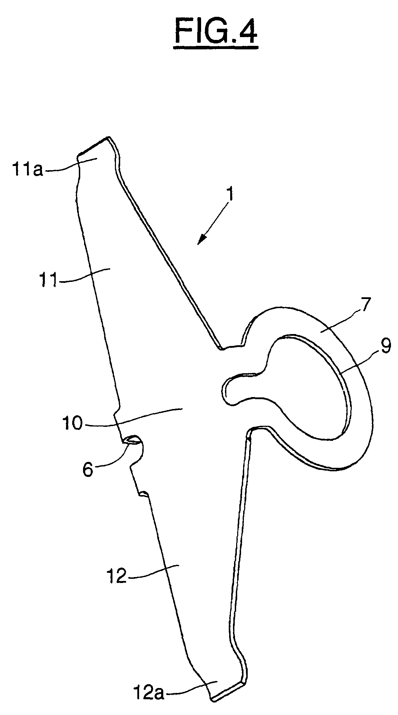

En se reportant aux figures 1 à 4, on voit qu'on a représenté un dispositif de maintien 1 qui est destiné au réglage et à la fixation d'un organe cylindrique 2 engagé dans un orifice ou passage cylindrique 3 d'une partie en saillie ou bossage 4 d'un support 5, l'organe 2 étant plus long que la largeur axiale du bossage 4.

Le dispositif de maintien 1 est réalisé à partir d'une plaque en un matériau déformable élastiquement et comprend deux bagues 6 et 7 qui sont disposées de part et d'autre du bossage 4, en appui sur ses flancs, et qui présente des passages 8 et 9 au travers desquels s'étendent les extrémités dépassantes de l'organe 2, ainsi qu'une traverse 10 qui relie axialement et sur une courte partie de leurs périphéries les bagues 6 et 7 et qui s'étend devant et à distance de la face d'extrémité du bossage 4, de telle sorte que les bagues 6 et 7 et la traverse 10 forment un cavalier à cheval sur le bossage 4.

Le dispositif de maintien 1 comprend en outre deux branches 11 et 12 opposées qui prolongent les côtés de la traverse 10 perpendiculaires aux bagues 6 et 7 et qui présentent des extrémités 11a et 12a qui viennent en appui sur des surfaces 13 et 14 du support 5 situées de part et d'autre du bossage 4 dans le sens perpendiculaire à l'axe de l'organe 2.

Le dispositif de maintien 1 est formé de telle sorte que, dans sa position montée décrite ci-dessus, les branches 11 et 12 sont élastiquement contraintes et tirent les bagues 6 et 7 perpendiculairement à l'axe de l'organe 2 vers l'extrémité du bossage 4, de telle sorte que l'organe 2, en appui contre la partie des passages 8 et 9 des bagues 6 et 7 opposées à la traverse 10 est appliqué contre la partie du passage 3 du bossage 4 situé du côté de la traverse 10.

Pour effectuer le montage, on procède de la manière suivante.

On installe le dispositif de maintien 1 de telle sorte que les bagues 6 et 7 s'étendent de part et d'autre du bossage 4.

On déforme les branches 11 et 12 en appuyant sur la traverse 10 en direction du bossage 4 jusqu'à placer les passages 8 et 9 des bagues 6 et 7 en face du passage 3.

On engage l'organe 2 par exemple au travers du passage 8 de la bague 6 puis au travers du passage 3 du bossage 4 puis au travers du passage 9 de la bague 7 en le disposant dans la position axiale souhaitée.

Puis on relâche le dispositif de maintien 1, ce dernier prenant la position montée décrite précédemment par légère détente des branches 11 et 12.

Pour modifier le réglage axial ou en rotation de l'organe 2, il suffit d'appuyer à nouveau sur la traverse 10 du dispositif de maintien 1 de manière à libérer l'organe 2, à installer cet organe dans une nouvelle position souhaitée, puis à relâcher le dispositif de maintien 1 comme décrit précédemment.

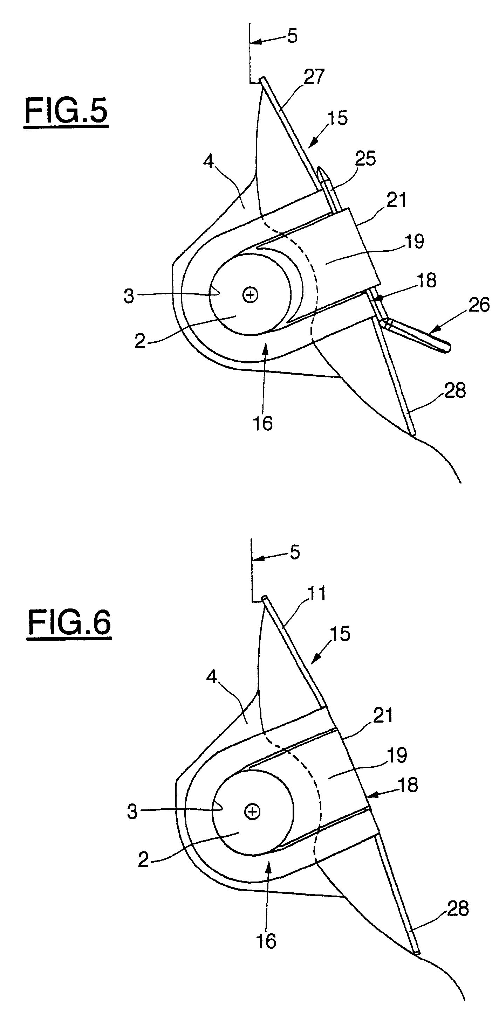

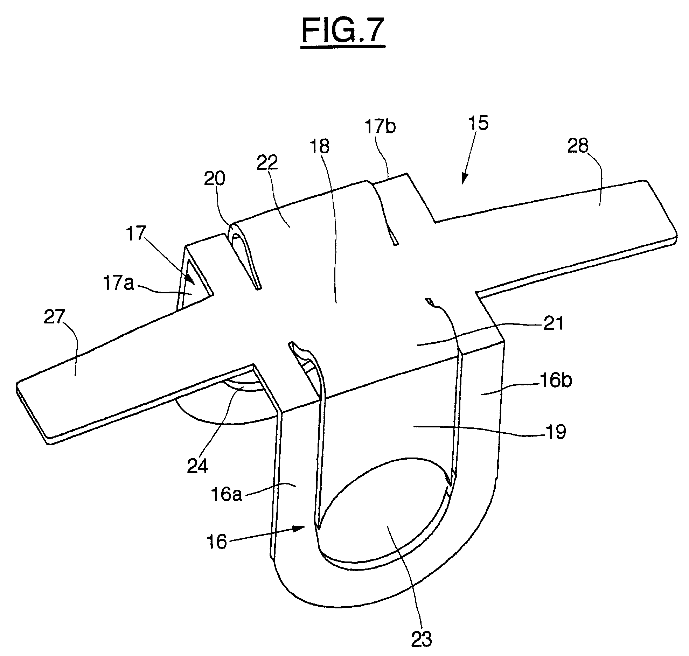

En se reportant aux figures 5 à 7, on peut voir qu'on a représenté un dispositif de maintien 15 qui se différencie du dispositif de maintien 1 décrit précédemment par le fait que les bagues 6 et 7 sont remplacées par des étriers 16 et 17 qui présentent des branches 16a, 16b et 17a et 17b qui sont respectivement parallèles de telle sorte que ces étriers 16 et 17 se présentent sous la forme de U dont les extrémités sont reliées à sa traverse 18.

En outre, le dispositif de maintien 15 comprend deux pattes 19 et 20 opposées qui s'étendent respectivement entre les branches 16a, 16b et 17a, 17b et qui sont reliées à des parties découpées 21 et 22 de la traverse 18, ces parties 21 et 22 étant en saillie par rapport au reste de la traverse 18, à l'opposé des étriers 16 et 17, de telle sorte que la patte 19 et la partie en saillie 21 constituent un L et que la patte 20 et la partie en saillie 22 constituent également un L.

Les extrémités des pattes 19 et 20 et les étriers 16 et 17 déterminent entre eux, respectivement, des passages 23 et 24.

Comme dans l'exemple précédent, la traverse 18 est munie de branches opposées 27 et 28.

Avant montage, les branches 25 d'un outil 26 représentées sur la figure 5 sont engagées en dessous des parties en saillie 21 et 22 et au-dessus de la traverse 18 de manière à accroître la dimension des passages 23 et 24.

Pour le montage, on procède de la même manière que pour le dispositif de maintien 1 décrit en référence aux figures 1 à 4.

Ainsi, on engage les étriers 16 et 17 de part et d'autre du bossage 4 du support 5. On appuie sur la traverse 18 de manière à dégager les ouvertures opposées du passage 3 du bossage 4. On engage l'organe 2 puis on relâche le dispositif 15. L'organe 2 est maintenu par les étriers 19 et 20 et peut être réglé de la manière que dans l'exemple précédent.

Puis, on retire l'outil 27 pour libérer les pattes 19 et 20 dont les extrémités viennent alors en prise avec l'organe 2, cet organe 2 se trouvant ainsi maintenu et emprisonné entre respectivement les étriers 16 et 17 et les extrémités des pattes 19 et 20 dans les passages 23 et 24, de part et d'autre du bossage 4.

Pour procéder à un nouveau réglage axial de l'organe 2, avant de procéder comme dans l'exemple précédent, on réinstalle l'outil 27 de façon à soulever les pattes 19 et 20. Le nouveau réglage axial étant réalisé, on libère à nouveau les pattes 19 et 20 qui reprennent alors leurs positions de maintien.

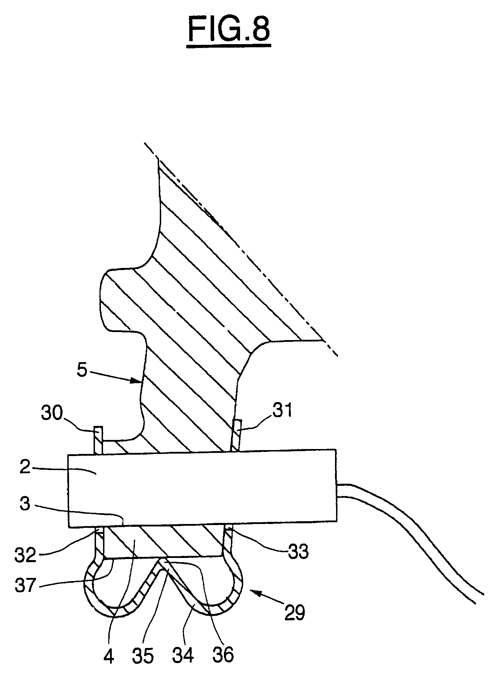

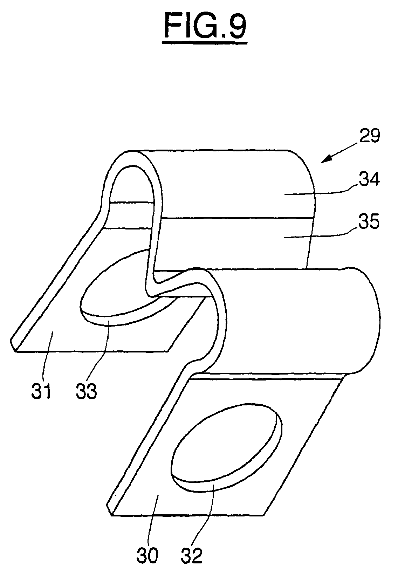

En se reportant maintenant aux figures 8 et 9, on voit qu'on a représenté un dispositif de maintien 29 qui comprend, comme dans l'exemple décrit en référence aux figures 1 à 4, des bagues opposées 30 et 31 présentant des passages 32 et 33 pour l'organe à maintenir 2 et une traverse 34 qui relie les bagues 30 et 31.

Dans cet exemple, la traverse 34 n'est plus munie de branches opposées mais est déformée dans sa partie centrale de manière à présenter une nervure 35 en V dont l'extrémité 36 est susceptible de venir en appui sur le sommet 37 du bossage 4 du support 5 de façon à produire le même effet que les branches 11 et 12 du dispositif de maintien 1 décrit en référence aux figures 1 à 4 par déformation élastique de cette nervure 35 en V.

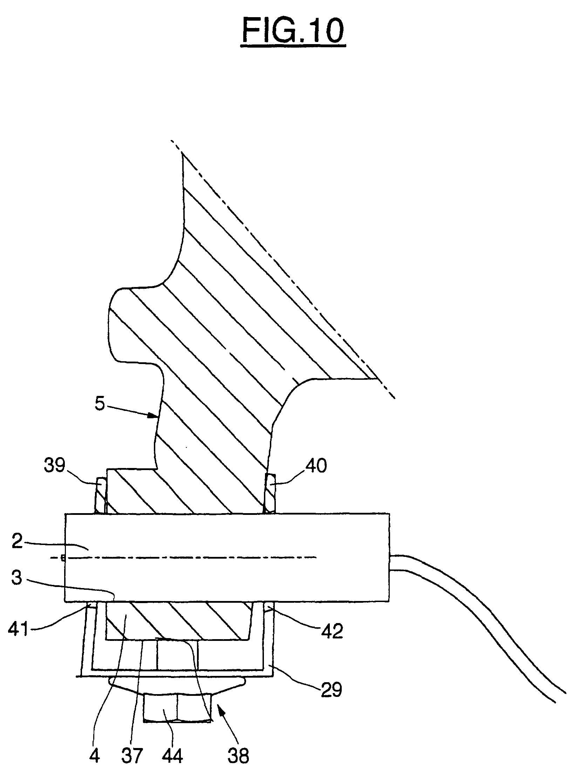

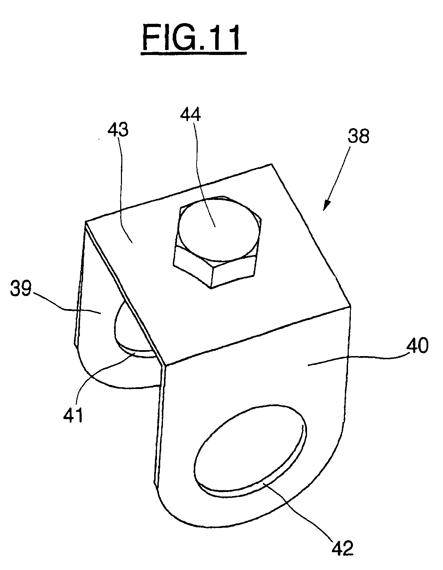

En se reportant aux figures 10 et 11, on voit qu'on a représenté un dispositif de maintien 38 qui comprend également deux bagues opposées 39 et 40 qui présentent des passages 41 et 42 pour l'organe à maintenir 2 et une traverse 43 qui relie ces bagues 39 et 40.

Dans cet exemple, la traverse 43 porte en son centre une vis 44 qui est susceptible de venir en appui contre le sommet 37 du bossage 4 du support 5 de manière à produire les mêmes effets que la nervure 35 de l'exemple décrit en référence aux figures 1 à 4, sous l'effet de la pression de la vis 44 et de l'élasticité de la traverse 43.

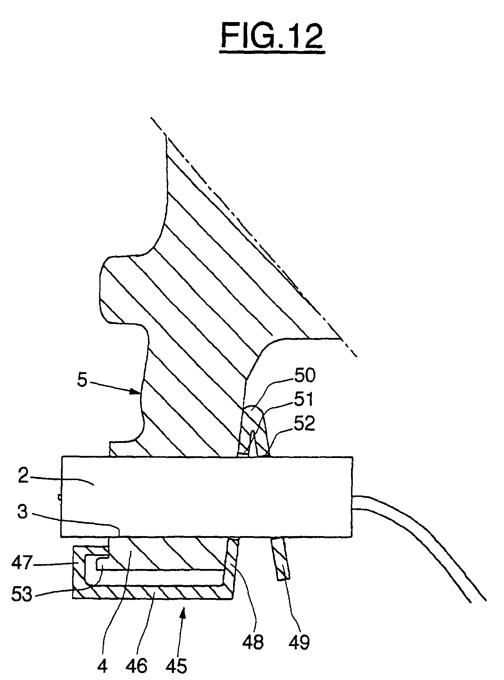

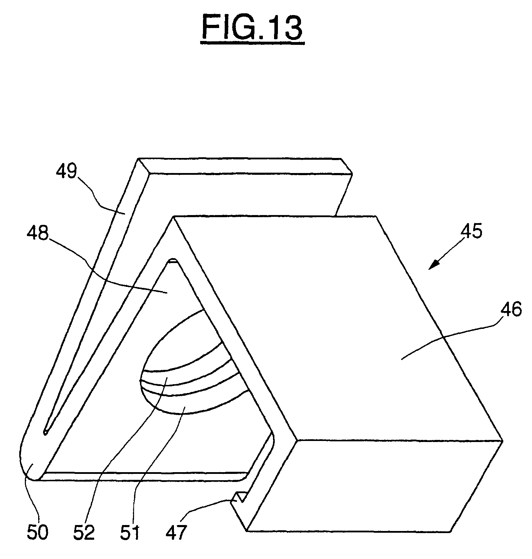

En se reportant aux figures 12 et 13, on voit qu'on a représenté un autre dispositif de maintien 45 qui comprend une traverse 46 qui porte d'un côté un crochet 47 et de l'autre côté une bague rectangulaire 48 et qui présente en outre une seconde bague rectangulaire 49 reliée à l'extrémité 50 de la bague 48 opposée à la traverse 46, ces bagues 48 et 49 formant un V ouvert du côté de la traverse 46 présentant des passages correspondants 51 et 52.

Pour effectuer le montage du dispositif de maintien 45, on engage le crochet 47 en arrière d'une partie latérale en saillie 53 du bossage 4 du support 5 prévue en complément au bord de son extrémité 37 et on amène la bague 48 en appui contre la face opposée du bossage 4, la traverse 46 s'étendant devant l'extrémité 37 du bossage 4.

On rapproche élastiquement la bague 49 de la bague 48 et on engage l'organe 2 au travers du passage 3 du bossage 4 et au travers des passages 50 et 51 des bagues 48 et 49. Puis on relâche la bague 49 qui, sous l'effet de l'élasticité, s'éloigne de la bague 48.

Ainsi, l'organe 2 se trouve pris dans les orifices 50 et 51 des bagues 48 et 49 sous l'effet élastique de leur ouverture en V et se trouve maintenu dans l'orifice 3 du bossage 4 sous l'effet de l'élasticité de la traverse 46 et du crochet 47.

Dans les exemples décrits ci-desus en référence aux figures annexées, il est avantageux que les flancs du bossage 4 contre lesquels les bagues des dispositifs de mantien viennent en appui soient lègèrement inclinés pour augmenter leurs effets élastiques de maintien de l'organe 2.

Dans un exemple, l'organe à maintenir 2 peut être constitué par un capteur et le support 5 par le carter d'un moteur de véhicule automobile qui présenterait un bossage 7 extérieur, en particulier un capteur de détection de mouvement rotatif d'un organe de ce moteur.

## Revendications

1. Dispositif de maintien d'un organe (2) engagé axialement dans un passage (3) ou orifice d'un support (4), en particulier d'un capteur sur le carter d'un moteur de véhicule automobile, le dispositif étant formé à partir d'une plaque en un matériau déformable élastiquement et comprenant une première partie (6) susceptible de venir en appui contre la paroi périphérique dudit organe (2), en dehors dudit orifice (3) et une seconde partie (11) susceptible de venir en appui contre au moins une zone (13) dudit support (5), **caractérisé par le fait que** ces parties sont disposées l'une par rapport à l'autre de façon à, après montage, ledit organe soit maintenu contre la paroi dudit passage ou orifice (3) dudit support (5) par la force élastique du matériau.

2. Dispositif selon la revendication 1, **caractérisé par le fait que** ladite première partie (6) est en appui contre la face latérale ou flanc dudit support (5) adjacente audit orifice

3. Dispositif selon l'une des revendications 1 et 2, **caractérisé par le fait qu'**il comprend deux bagues opposées (6, 7), constituant ladite première partie, susceptibles d'être disposées de part et d'autre d'une partie en saillie (4) dudit support (5) présentant ledit orifice (3) et au travers desquelles est susceptible de s'étendre ledit organe(2) ainsi qu'une traverse (10) reliant lesdites bagues.

4. Dispositif selon la revendication 3 précédente, **caractérisé par le fait que** ladite traverse (10) porte deux branches opposées (11, 12), constituant ladite seconde partie.

5. Dispositif selon l'une des revendications 3 à 4 **caractérisé par le fait que** ladite traverse (34) présente au moins une partie déformée susceptible de venir en appui contre une zone d'extrémité de ladite partie en saillie dudit support.

6. Dispositif selon l'une des revendications 3 à 5, **caractérisé par le fait que** ladite traverse porte des pattes (19, 20) susceptibles de venir en appui contre la paroi périphérique dudit organe de façon à appliquer ce dernier dans les passages (23, 24) desdites bagues, à l'opposé de la zone d'appui dudit organe (2) dans le passage (3) dudit support (5).

7. Dispositif selon la revendication 3, **caractérisé par le fait que** ladite traverse (43) porte une vis (44) susceptible de venir en appui contre une zone d'extrémité (37) de ladite partie en saillie (4) dudit support (5).

8. Dispositif selon l'une des revendications 1 et 2, **caractérisé par le fait qu'**il comprend deux bagues (48 et 49) reliées en un endroit de leurs périphéries et susceptibles d'être traversée par ledit organe à maintenir (2), de façon à coincer cet organe lors de leur écartement, ainsi qu'une traverse (46) présentant un crochet (47) entrant en prise avec ledit support (5).

## Claims

1. A device for holding a member (2) engaged axially in a passage (3) or orifice of a support (4), in particular a sensor on the housing of an automobile vehicle engine, the device being formed from a plate of elastically deformable material and comprising a first portion (6) which is able to bear on the peripheral wall of the member (2), outside the orifice (3), and a second wall (11) able to bear against at least one zone (13) of the support (5), **characterised in that** these portions are disposed with respect to one another such that, after mounting, the member is held against the wall of the passage or orifice (3) of the support (5) by the elastic force of the material.

2. A device as claimed in claim 1, **characterised in that** the first portion (6) bears against the lateral surface of flank of the support (5) adjacent to the orifice.

3. A device as claimed in one of claims 1 and 2, **characterised in that** it comprises two opposing rings (6, 7), forming the first portion, which may be disposed on either side of a projecting portion (4) of the support (5) presenting the orifice (3), and through which the member (2) and a strut (10) connecting these rings may extend.

4. A device as claimed in claim 3, **characterised in that** the strut (10) bears two opposing arms (11, 12), forming the second portion.

5. A device as claimed in one of claims 3 to 4, **characterised in that** the strut (34) has at least one deformed portion able to bear against an end zone of the projecting portion of the support.

6. A device as claimed in one of claims 3 to 5, **characterised in that** the strut bears lugs (19, 20) able to bear against the peripheral wall of the member so as to apply the latter in the passages (23, 24) of the rings, opposite the bearing zone of the member (2) in the passage (3) of the support (5).

7. A device as claimed in claim 3, **characterised in that** the strut (43) comprises a screw (44) able to bear against an end zone (37) of the projecting portion (4) of the support (5).

8. A device as claimed in one of claims 1 and 2, **characterised in that** it comprises two rings (48, 49) connected at a point of their peripheries and able to be traversed by the member (2) to be held, so as to wedge this member when they are moved apart, and a strut (46) having a hook (47) coming into engagement with the support (5).

## Patentansprüche

1. Haltevorrichtung eines Elements (2), welches axial in einem Durchgang (3) oder einer Öffnung eines Trägers (4) eingebunden ist, insbesondere eines Sensors an dem Gehäuse eines Motors eines Kraftfahrzeugs, wobei die Vorrichtung ausgehend von einer Platte aus einem elastisch deformierbaren Material gebildet ist, welches einen ersten Teil (6) aufweist, der geeignet ist, gegen die periphere Wand des Elements (2) außerhalb der Öffnung (3) in Anlage zu gelangen, und einen zweiten Teil (11), der geeignet ist, gegen mindestens eine Zone (13) des Trägers (5) in Anlage zu gelangen, **dadurch gekennzeichnet, dass** diese Teile zueinander in einer Weise angeordnet sind, dass nach der Montage das Element gegen die Wand des Durchgangs oder der Öffnung (3) des Trägers (5) durch die elastische Kraft des Materials gehalten wird.

2. Vorrichtung nach Anspruch 1, **dadurch gekennzeichnet, dass** der erste Teil (6) gegen die zü der Öffnung benachbarte seitliche Wand oder der Flanke des Trägers (5) in Anlage ist.

3. Vorrichtung nach einem der Ansprüche 1 und 2, **dadurch gekennzeichnet, dass** sie zwei gegenüber liegende Ringe (6, 7) aufweist, welche den ersten Teil bilden, die geeignet sind, beiderseits eines vorragenden Teils (4) des Trägers (5) angeordnet zu werden, welche die Öffnung (3) aufweisen und durch welche das Element (2) geeignet ist, sich hindurch zu erstrecken, sowie eine Traverse (10), welche die Ringe verbindet.

4. Vorrichtung nach dem vorigen Anspruch 3, **dadurch gekennzeichnet, dass** die Traverse (10) zwei gegenüber liegende Äste (11, 12) trägt, welche den zweiten Teil bilden.

5. Vorrichtung nach einem der Ansprüche 3 bis 4, **dadurch gekennzeichnet, dass** die Traverse (34) mindestens einen deformierten Teil aufweist, der geeignet ist, gegen eine Endzone des vorragenden Teils des Trägers in Anlage zu gelangen.

6. Vorrichtung nach einem der Ansprüche 3 bis 5, **dadurch gekennzeichnet, dass** die Traverse Laschen (19, 20) trägt, die geeignet sind, in Anlage gegen die periphere Wand des Elements in einer Weise zu gelangen, um dieses letztere in den Durchgängen (23, 24) der Ringe zu befestigen gegenüber liegend der Anlagezone des Elements (2) in dem Durchgang (3) des Trägers (5).

7. Vorrichtung nach Anspruch 3, **dadurch gekennzeichnet, dass** die Traverse (43) eine Schraube (44) trägt, die geeignet ist, in Anlage gegen eine Endzone (37) des vorragenden Teils (4) des Trägers (5) zu gelangen.

8. Vorrichtung nach einem der Ansprüche 1 und 2, **dadurch gekennzeichnet, dass** sie zwei Ringe (48 und 49) aufweist, welche an einer Stelle ihrer Peripherien verbunden sind und geeignet sind, von dem zu haltenden Element (2) durchquert zu werden in einer Weise, um dieses Element während ihrer Entfernung einzuklemmen, sowie eine Traverse (46), welche einen Haken (47) aufweist, der mit dem Träger (5) in Eingriff tritt.
